# EUROPEAN PATENT APPLICATION

(11) **EP 4 841 073 A1**
(43) Date of publication of application: **18.11.2026**
(21) Application number: 26173124.4
(22) Date of filing: 17.04.2026
(51) Int. Cl.: F01D 21/08, F01D 21/04, F01D 25/16, F01D 25/24

(54) **FORCE-LIMITING BEARING SUPPORT WITH RECOVERY FOR GAS TURBINE FAN**

(30) Priority: 17.04.2025 US 202519181991
(71) Applicant: Pratt & Whitney Canada Corp., Longueuil, Québec J4G 1A1 (CA)
(72) Inventor: TOMES, Nathan, (01BE5) Longueuil, J4G 1A1 (CA); RICHARDSON, Tyler, (01BE5) Longueuil, J4G 1A1 (CA)
(74) Representative: Dehns

(57) **Abstract**

A force-limiting bearing support with recovery capability assembly (401) is provided for mitigating imbalance in an engine (10) due to a fan blade off (FBO) event. The force-limiting bearing support with recovery capability assembly (401) includes an annular flange (420) fixed to a casing (410) of the engine (10), spokes (430) extending radially inwardly from the annular flange (420), an annular bearing element (440) and a buckling membrane (460) attached to respective interior ends (431) of each of the spokes (430) to radially restrain the annular bearing element (440) against loading up to a designed buckling load, which is less than or equal to loading of the FBO event, to elastically buckle under excessive loading beyond the designed buckling load and to recover once the excessive loading ceases.

## Description

### BACKGROUND

The present disclosure relates to aircraft gas turbine engines and, in particular, to a force-limiting bearing support with recovery of a gas turbine engine of an aircraft.

Aircraft engine fans are designed to resist damage caused by foreign object ingestion. However, in certain circumstances, a fan may be damaged to such an extent that parts of one or more of the fan blades become detached from the rotor disk (referred to herein as a fan blade off event or FBO event). This may result in a significant imbalance requiring shutdown of the engine to minimize load transmission to the aircraft. The imbalance in the fan created by the blade loss generates extremely high radial loads which must at least be partially absorbed as the engine is run down to windmilling speed (i.e., the speed at which the rotor spins in a non-operative condition as a result of the aircraft moving through the air).

Under certain circumstances, the vibration resulting from the fan imbalance at windmilling speed can still be considerable. If not appropriately controlled, these vibrations may damage the engine structure and the aircraft and present control difficulties.

### SUMMARY

According to an aspect of the disclosure, a force-limiting bearing support with recovery capability assembly is provided for mitigating imbalance in an engine due to a fan blade off (FBO) event. The force-limiting bearing support with recovery capability assembly includes an annular flange fixed to a casing of the engine, spokes extending radially inwardly from the annular flange, an annular bearing element and a buckling membrane attached to respective interior ends of each of the spokes to radially restrain the annular bearing element against loading up to a designed buckling load, which is less than or equal to loading of the FBO event, to elastically buckle under excessive loading beyond the designed buckling load and to recover once the excessive loading ceases.

In a further embodiment of the previous embodiment, during the excessive loading, the buckling membrane remains elastically buckled and the spokes act as bumpers for radially restraining the annular bearing element, and, following cessation of the excessive loading, the buckling membrane returns to an initial shape thereof.

In a further embodiment of any of the previous embodiments, the buckling membrane includes metallic material.

In a further embodiment of any of the previous embodiments, the buckling membrane includes discrete segments between neighboring spokes, each discrete segment having an initial shape characterized in that each discrete segment is curved radially inwardly for loading up to the designed buckling load.

In a further embodiment of any of the previous embodiments, respective ends of each of the discrete segments are fixed to a corresponding spoke at a point radially outboard of an interior end of the corresponding spoke, and the interior end of the corresponding spoke acts as a bumper against the annular bearing element to prevent plastic deformation of the proximal discrete segments.

In a further embodiment of any of the previous embodiments, respective ends of each of the discrete segments are fixed to an interior end of a corresponding spoke, and the force-limiting bearing support with recovery capability assembly further includes an annular bumper to act against the annular bearing element to prevent plastic deformation of the discrete segments.

In a further embodiment of any of the previous embodiments, the annular bumper is axially offset from the buckling membrane.

In a further embodiment of any of the previous embodiments, the annular bearing element includes a radially outwardly extending flange, each of the spokes comprises forward and aft spokes to axially restrain the radially outwardly extending flange, and the buckling membrane includes a forward buckling membrane attached to the respective interior ends of each of the forward spokes and an aft buckling membrane attached to the respective interior ends of each of the aft spokes.

According to an aspect of the disclosure, a force-limiting bearing support with recovery capability assembly is provided for mitigating imbalance in an engine due to a fan blade off (FBO) event. The force-limiting bearing support with recovery capability assembly includes an annular flange fixed to a casing of the engine, an annular bearing element, a buckling double membrane attached to an interior surface of the annular flange to radially restrain the annular bearing element against loading up to a designed buckling load, which is less than or equal to loading of the FBO event, to elastically buckle under excessive loading beyond the designed buckling load and to recover once the excessive loading ceases and an annular bumper disposed within the annular flange to prevent plastic deformation of the buckling double membrane.

In a further embodiment of any of the previous embodiments, an anti-rotation feature prevents relative rotation between the annular flange and the buckling double membrane.

In a further embodiment of any of the previous embodiments, during the excessive loading, the buckling double membrane remains elastically buckled, and, following cessation of the excessive loading, the buckling double membrane returns to an initial shape thereof.

In a further embodiment of any of the previous embodiments, the buckling double membrane includes metallic material.

In a further embodiment of any of the previous embodiments, the buckling double membrane includes an interior membrane including first contact points and first discrete segments between neighboring first contact points, each first discrete segment being curved radially inwardly for loading up to the designed buckling load and an exterior membrane including second contact points and second discrete segments between neighboring second contact points, each second discrete segment being curved radially outwardly and affixed to the interior surface of the annular flange, each first contact point being affixed to a corresponding one of the second contact points.

In a further embodiment of any of the previous embodiments, the annular bumper is axially offset from the buckling double membrane.

According to an aspect of the disclosure, a force-limiting bearing support with recovery capability assembly is provided for mitigating imbalance in an engine due to a fan blade off (FBO) event. The force-limiting bearing support with recovery capability assembly includes an annular flange fixed to a casing of the engine, an annular bearing element, a buckling single membrane attached to an interior surface of the annular flange to radially restrain the annular bearing element against loading up to a designed buckling load, which is less than or equal to loading of the FBO event, to elastically buckle under excessive loading beyond the designed buckling load and to recover once the excessive loading ceases and an annular bumper disposed within the annular flange to prevent plastic deformation of the buckling single membrane.

In a further embodiment of any of the previous embodiments, an anti-rotation feature prevents relative rotation between the annular flange and the buckling single membrane.

In a further embodiment of any of the previous embodiments, during the excessive loading, the buckling single membrane remains elastically buckled, and, following cessation of the excessive loading, the buckling single membrane returns to an initial shape thereof.

In a further embodiment of any of the previous embodiments, the buckling single membrane includes metallic material.

In a further embodiment of any of the previous embodiments, the buckling single membrane includes contact points affixed to the interior surface of the annular flange and discrete segments between neighboring contact points, each discrete segment being curved radially inwardly for loading up to the designed buckling load.

In a further embodiment of any of the previous embodiments, the annular bumper is axially offset from the buckling single membrane.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a cross-sectional view of a prior art turboshaft engine;
FIG. 2 is a side schematic diagram of a prior art bearing support assembly;
FIG. 3 is a graphical illustration of snap-through buckling in accordance with embodiments;
FIG. 4 is a side schematic diagram of a force-limiting bearing support with recovery capability assembly in accordance with embodiments;
FIGS. 5A-5D are graphical illustrations of operations of the force-limiting bearing support with recovery capability assembly of FIG. 4 in accordance with embodiments;
FIG. 6 is an enlarged view illustrating that interior ends of spokes limit annular bearing element deflection in the force-limiting bearing support with recovery capability assembly of FIG. 4 in accordance with embodiments;
FIG. 7 is an enlarged view illustrating that an annular bumper limits annular bearing element deflection in the force-limiting bearing support with recovery capability assembly of FIG. 4 in accordance with embodiments;
FIG. 8 is an enlarged side view of a force-limiting bearing support with recovery capability assembly with axial restraint in accordance with embodiments;
FIGS. 9A-9C are graphical illustrations of the force-limiting bearing support with recovery capability assembly with axial restraint of FIG. 8 in accordance with embodiments;
FIG. 10 is an axial schematic diagram of force-limiting bearing support with recovery capability assembly with a buckling double membrane and an annular bumper in accordance with embodiments; and
FIG. 11 is an axial schematic diagram of a force-limiting bearing support with recovery capability assembly with a buckling single membrane and an annular bumper in accordance with embodiments.

### DETAILED DESCRIPTION

The following disclosure is applicable to any type of gas turbine engine, including, but not limited to, turbofans, turboshafts, turboprops, turbojets, electrical drives, hybrid drives, etc. The gas turbine engine described below is provided by way of example, and should not be interpreted as limiting the scope of the application or the claims in any way.

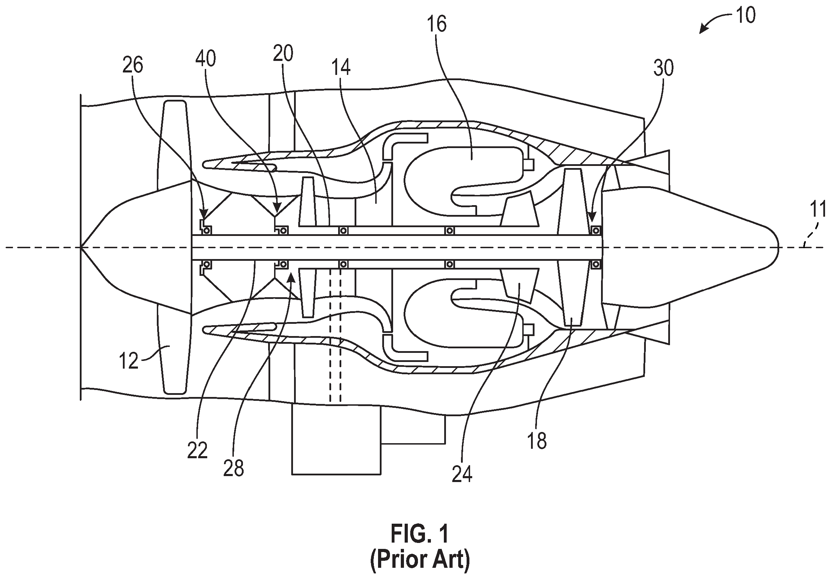

FIG. 1 illustrates a turbofan gas turbine engine 10 of a type provided for use in subsonic flight and generally including a low pressure spool assembly, which includes a fan assembly 12, a low pressure compressor assembly (not shown) and a low pressure turbine assembly 18 connected by a low pressure shaft 22, and a high pressure spool assembly, which includes a high pressure compressor assembly 14 and a high pressure turbine assembly 24 connected by a high pressure shaft 20. The engine 10 further includes a combustor 16 in which compressed air from the high pressure compressor 14 is mixed with fuel and ignited for generating an annular stream of hot combustion gases from which the low pressure and high pressure turbine sections extract energy.

The low pressure spool is rotatably supported by a number of axially spaced-apart bearings concentrically mounted about the central axis 11 of the engine 10. The low pressure shaft 22 is supported at its front or upstream end by first and second bearings 26 and 28 and at a rear end thereof by a third bearing 30. The bearing arrangement for a particular engine, including but not limited to the number and type of bearings selected, is typically determined by a number of factors specific to that engine. The bearing arrangement described herein is exemplary only, and not intended to be limiting. In this example, the first and third bearings 26 and 30 may be roller bearings for radially supporting the low pressure shaft 22 and the second bearing 28 may be a thrust bearing to provide both axial and radial support to the low pressure shaft 22. The first bearing 26 can be disposed adjacent the fan rotor and the second bearing 28 can be disposed adjacent to and downstream from the first bearing 26, and upstream of the high pressure compressor 14 relative to a flow direction of the gases through the engine 10. The bearings and supporting structure flanges may be arranged in any suitable fashion in the context of the present application.

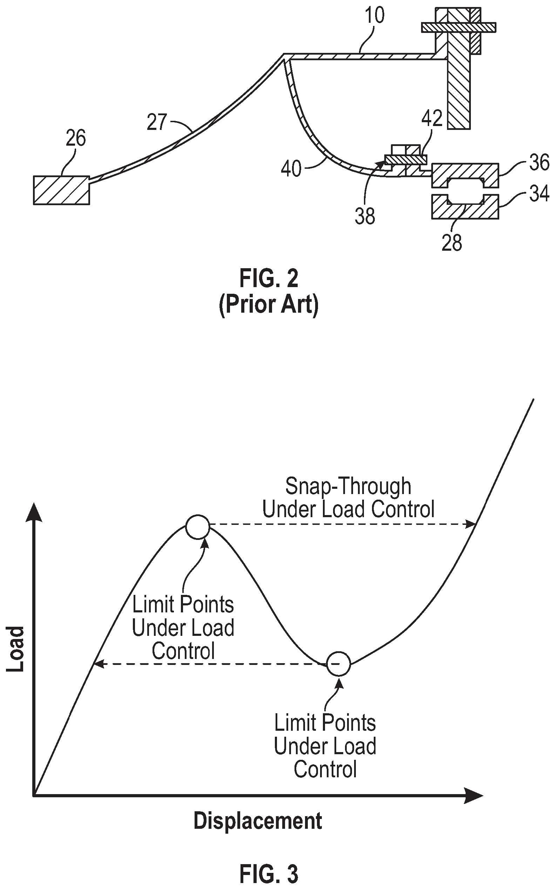

With reference to FIG. 2, the first bearing 26 can be supported on the stator structure of the engine 10 by a first bearing support 27. To minimize the effect of potentially damaging abnormal imbalance loads, such as those caused by FBO-induced imbalance loads, the first bearing support 27 can be designed to be frangible when subject to a predetermined critical load. As shown in FIG. 2, the first bearing support 27 may be provided in the form of a fusible conical structure connected to an outer race of the first bearing 26. The fusible conical structure fails when subject to a critical loading condition to thereby decouple the first bearing 26 from the stator structure of the engine 10. The fusible conical structure decouples the first bearing 26 from the static structure of the engine 10 by buckling, collapsing, crimping, yielding or fracturing. The net result is that the radial support provided to the first bearing 26 is either eliminated or reduced to a negligible value. The second bearing 28 may be provided in the form of a thrust bearing having rolling elements retained by a bearing cage and disposed between inner and outer races 34, 36. The inner race 34 can be securely mounted to the low pressure shaft 22. The outer race 36 has a mounting flange 38 projecting radially outwardly from the front end thereof for connection to a second bearing support 40. The second bearing support 40 can have a frusto-conical shape. A series of circumferentially distributed frangible fasteners, such as fusible or shear bolts 42 or the like, may be used to fasten the mounting flange 38 of the outer race 36 to the bearing support 40. The fusible bolts 42 may shear for structurally decoupling the second bearing 28 from the stator structure of the engine 10, and are sized so that shear preferably occurs after decoupling at the first bearing 26, thereby preventing the transmission of potentially damaging imbalance forces or other vibratory forces to the engine 10 and the airframe in the event of a fan blade loss or another abnormal fan rotor imbalance event.

It is often the case that, during an FBO event, some engine architectures are designed to require that the first and second bearings 26 and 28 break to help prevent loads and vibrations caused by imbalances from being transferred from the rotor to the engine 10 and ultimately to the aircraft structure. It has been found, however, that designing the fusible or shear bolts 42 to always break at FBO (requiring high stress) but not yield at limit loads or installation and have a full lifespan (all requiring low stress) is difficult.

A need therefore exists for an engine architecture in which at least the second bearing support for the second bearing described above is broken due to buckling at stresses below yield.

Thus, as will be described below, a force-limiting bearing support with recovery is provided for use in an engine of an aircraft. The force-limiting bearing support with recovery is characterized in that a buckling capacity thereof is designed to be greater than ultimate maneuver loads but less than those experienced during FBO. If desirable, the buckling capacity can be set such that collapse only occurs under rundown when a fan resonance occurs that increases the radial forces beyond those during the initial containment event. The post-buckled shape of the force-limiting bearing support with recovery can act as a bumper for the bearing without need for additional parts. In the force-limiting bearing support with recovery, buckling members are not connected at the center ring to ensure that the member is only under compression and not tension, buckling membranes may be curved in or out of plane such that they form a 'blister' shape and points at which the buckling members meet spokes and each other are designed to remain elastic throughout the buckling phenomenon and to act as a fixed joint. In some configurations, axial support provides sufficiently stiff axial support for rotor stability but does not carry significant radial loading and can, but is not required to, have a shared load path with the first bearing support.

With reference to FIG. 3, snap-through buckling is a phenomenon where a structure has two or more equilibrium states at a given force. As shown in FIG. 3, in the initial loading region, load-displacement is linear. Once the first limit point is passed, the structural resistance force drops and the system 'snaps' through to the next equilibrium state. For the force-limiting bearing support with recovery described herein, a geometry thereof will be selected such that structures will recover their initial shape when the force drops below the second limit point, causing the system to 'snap back'.

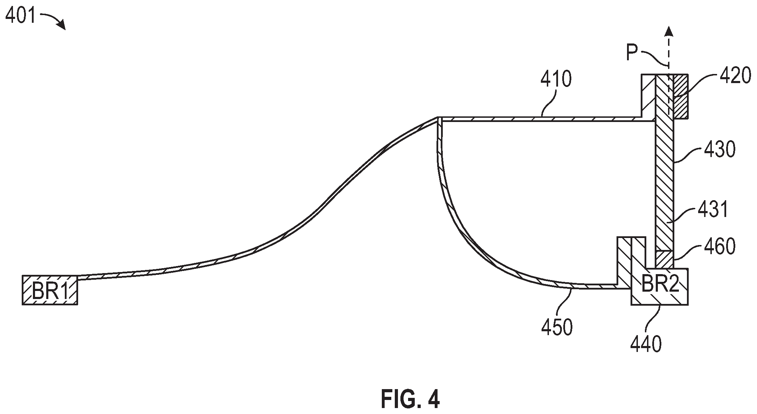

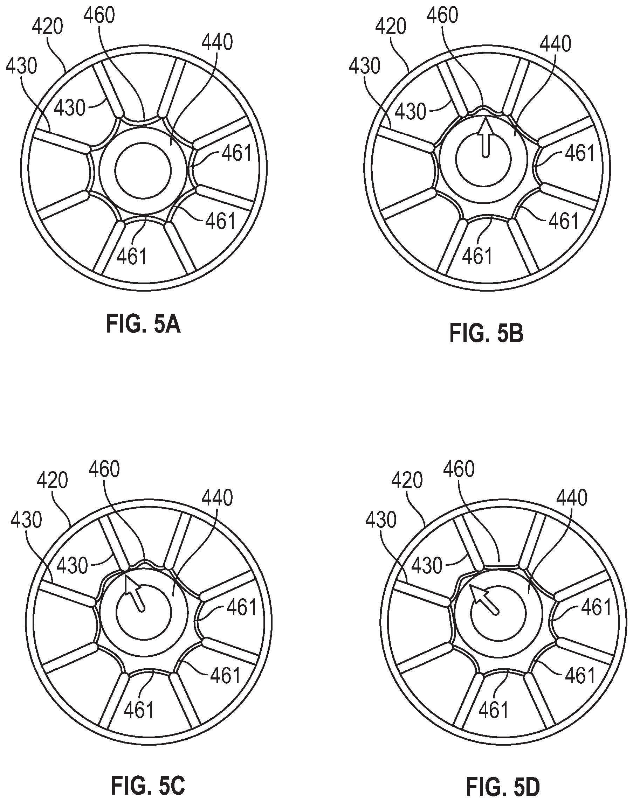

With reference to FIG. 4 and FIGS. 5A-5D, a force-limiting bearing support with recovery capability assembly 401 is provided for mitigating imbalance in an engine, such as the engine 10 of FIGS. 1 and 2, due to an FBO event. The force-limiting bearing support with recovery capability assembly 401 includes a casing 410, such as an engine casing, an annular flange 420 that is fixed to the casing 410, spokes 430 that extend radially inwardly from the annular flange 420, an annular bearing element 440, such as an outer race of a bearing (i.e., the second bearing 28 of FIG. 1), an axial restraint 450 and a buckling membrane 460. The spokes 430 are generally arranged in a plane P. The axial restraint 450 is attached at opposite ends thereof to the casing 410 and to the annular bearing element 440 and is configured to axially restrain the annular bearing element 440 relative to the plane P of the spokes 430. The buckling membrane 460 is attached to respective interior ends 431 of each of the spokes 430. The buckling membrane 460 is configured to radially restrain the annular bearing element 440 against loading up to a designed buckling load, which is designed to be less than or equal to loading of the FBO event, to elastically deform and buckle under excessive loading beyond the designed buckling load and to recover once the excessive loading ceases.

The buckling membrane 460 can include metallic material or some other suitable material and can include discrete segments 461 (see FIG. 5A) between neighboring spokes 430. Each discrete segment 461 has an initial shape characterized in that each discrete segment 461 is curved radially inwardly for loading up to the designed buckling load.

An operation of the buckling membrane 460 is illustrated in FIGS. 5A-5D. As shown in FIG. 5A, during normal engine operations, the annular bearing element 440 is radially restrained by the discrete segments 461 as long as the annular bearing element 440 exerts forces on the discrete segments 461 that are less than the designed buckling load. As shown in FIG. 5B, the annular bearing element 440 exerts a force that is at least equal to the designed buckling load on one of the discrete segments 461 in accordance with an FBO event. This force causes the one discrete segment 461 to elastically deform and buckle whereupon the annular bearing element 440 becomes offset and the corresponding spokes 430 serve as bumpers for radially restraining the annular bearing element 440. As shown in FIGS. 5C and 5D, engine rotation continues and the offset annular bearing element 440 causes each of the discrete segments 461 to elastically deform and buckle in sequence. Once each discrete segment 461 elastically deforms and buckles and the offset annular bearing element 440 moves on, as shown in FIGS. 5C and 5D, the discrete segments 461 elastically recover to their initial shapes.

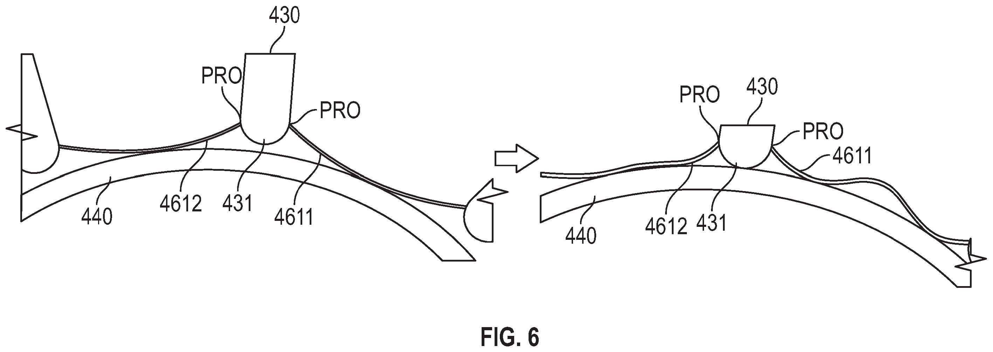

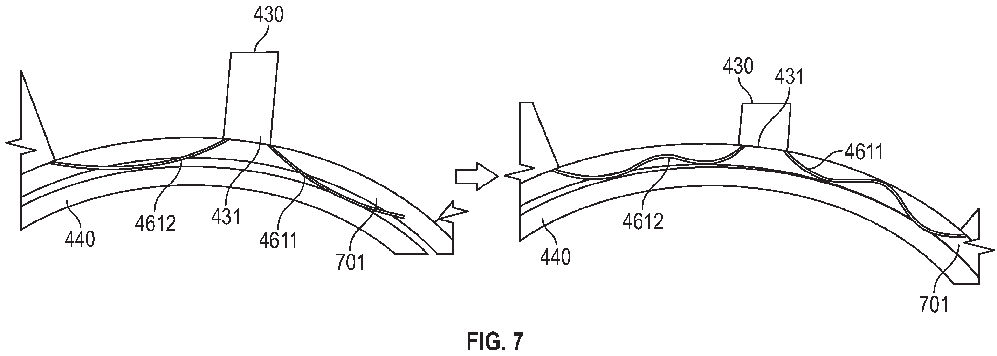

With continued reference to FIG. 4 and FIGS. 5A-5D and with additional reference to FIGS. 6 and 7, respective ends 4611, 4612 of each of the discrete segments 461 can be fixed to the interior end 431 of the corresponding spoke 430 at a point PRO that is defined as being radially outboard of the interior end 431 (see FIG. 6) and/or the respective ends 4611, 4612 of each of the discrete segments 461 can be fixed to the interior end 431 of the corresponding spoke 430 (see FIG. 7). In the case of the respective ends 4611, 4612 of each of the discrete segments 461 being fixed to the interior end 431 of the corresponding spoke 430 at the point PRO of FIG. 6, the interior end 431 of the corresponding spoke 430 acts as a bumper against the annular bearing element 440 to prevent plastic deformation of the proximal discrete segments 461 and to ensure that any deformation and buckling thereof remains elastic. In the case of the respective ends 4611, 4612 of each of the discrete segments 461 being fixed to the interior end 431 of the corresponding spoke 430 of FIG. 7, the force-limiting bearing support with recovery capability assembly 401 can further an annular bumper 701 to act against the annular bearing element 440 to prevent plastic deformation of the proximal discrete segments 461 and to ensure that any deformation and buckling thereof remains elastic.

The annular bumper 701 can be axially separated from the buckling membrane 460 and limits deflection of the annular bearing element 440 so that the annular bearing element 440 is radially supported by the annular bumper 701 after the buckling membrane 460 has elastically deformed and buckled. The annular bumper 701 thus ensures that the buckling membrane 460 does not plastically deform and that the discrete segments 461 are able to recover their initial shapes.

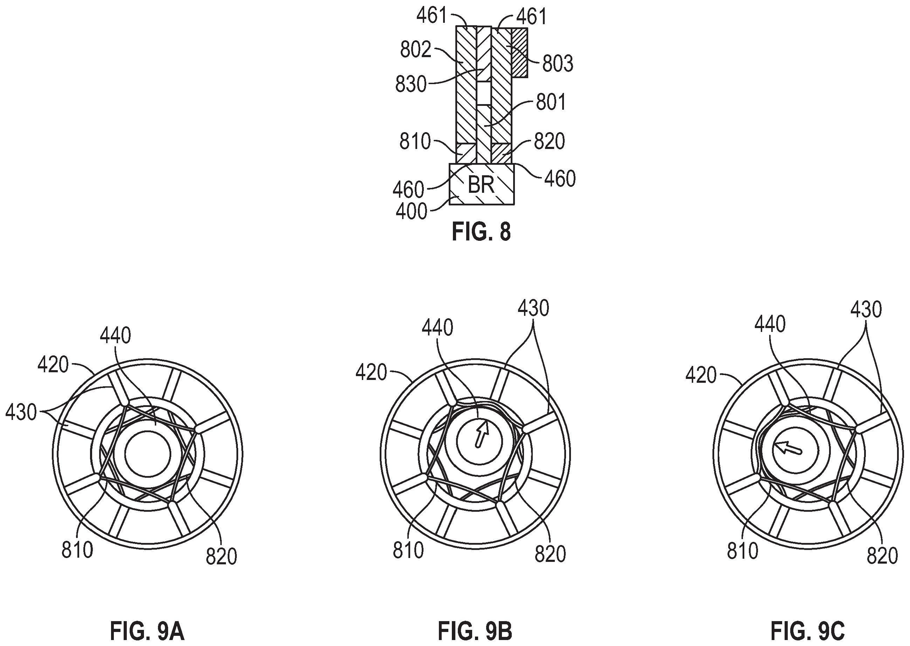

With continued reference to FIG. 4 and FIGS. 5A-5D and with additional reference to FIG. 8 and FIGS. 9A-9C, the axial restraint 450 of FIG. 4 may not be provided or available. In these or other cases, the annular bearing element 440 can include a radially outwardly extending flange 801, and each of the spokes 461 can include or be provided as a forward spoke 802 and an aft spoke 803 where the forward and aft spokes 802 and 803 serve to axially restrain the radially outwardly extending flange 801 and the annular bearing element 440 as a whole to at least a limited extent for use with roller bearings in particular. In these or other cases, the buckling membrane 460 can include or be provided as a forward buckling membrane 810, which is attached to the respective interior ends of each of the forward spokes 802, and an aft buckling membrane 820, which is attached to the respective interior ends of each of the aft spokes 803. As shown in FIGS. 9A-9C, the forward and aft spokes 802 and 803 can have alternating spoke attachment points. This can allow for shallower snap-through buckling membrane 460 angles while retaining significant displacement, opening the design space to larger combinations of initial stiffness, effective bumper radial position, snap-through force, etc. An annular bumper 830 can be provided between the forward and aft spokes 802 and 803 to act against the radially outwardly extending flange 801 to prevent plastic deformation of the forward and aft buckling membranes 810 and 820 and to ensure that any deformation and buckling thereof remains elastic

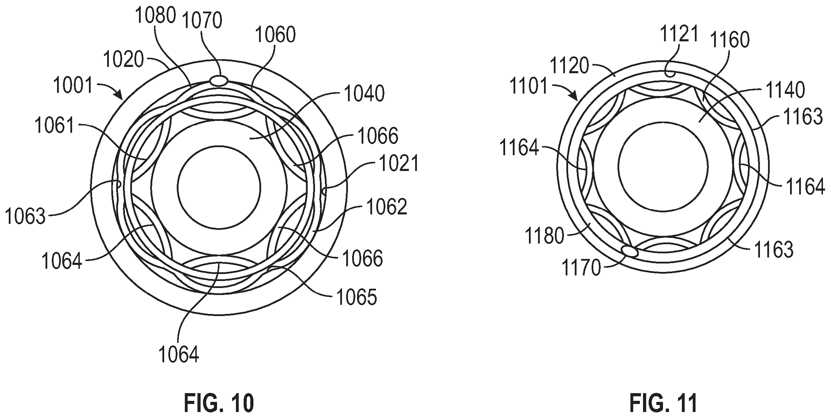

With reference to FIG. 10, a force-limiting bearing support with recovery capability assembly 1001 is provided for mitigating imbalance in an engine, such as the engine 10 of FIGS. 1 and 2, due to an FBO event. The force-limiting bearing support with recovery capability assembly 1001 includes a casing, such as an engine casing (see, e.g., the casing 410 of FIG. 4), an annular flange 1020 that is fixed to the casing, an annular bearing element 1040, such as an outer race of a bearing (i.e., the second bearing 28 of FIG. 1), an axial restraint (see the axial restraint 450 of FIG. 4), a buckling double membrane 1060, anti-rotation features 1070 and an annular bumper 1080. As above, the axial restraint is attached at opposite ends thereof to the casing and to the annular bearing element 1040 and is configured to axially restrain the annular bearing element 1040 relative to a plane of the annular flange 1020. The buckling double membrane 1060 is attached to an interior surface 1021 of the annular flange 1020. The buckling double membrane 1060 is configured to radially restrain the annular bearing element 1040 against loading up to a designed buckling load, which is designed to be less than or equal to loading of the FBO event, to elastically deform and buckle under excessive loading beyond the designed buckling load and to recover once the excessive loading ceases. The one or more anti-rotation features 1070 prevent relative rotation between the annular flange 1020 and the buckling double membrane 1060. The annular bumper 1080 is disposed within the annular flange 1020 to prevent plastic deformation of the buckling double membrane 1040 and to ensure that any deformation and buckling thereof remains elastic.

The buckling double membrane 1060 can include metallic material or some other suitable material and can include an interior membrane 1061 and an exterior membrane 1062. The interior membrane 1061 includes first contact points 1063 and first discrete segments 1064 between neighboring first contact points 1063. Each first discrete segment 1064 can be curved radially inwardly for loading up to the designed buckling load and for elastic deformation and buckling due to loading at or above the designed buckling load. The exterior membrane 1062 includes second contact points 1065 and second discrete segments 1066 between neighboring second contact points 1065. Each second discrete segment 1066 can be curved radially outwardly and affixed to the interior surface 1021 of the annular flange 1020. Each first contact point 1063 can be affixed to a corresponding one of the second contact points 1065. In accordance with embodiments, each second discrete segment 1066 can be welded to the interior surface 1021 of the annular flange 1020 and each first contact point 1063 can be welded to the corresponding one of the second contact points 1065. During the excessive loading, the first discrete segments 1064 of the buckling double membrane 1060 remain elastically deformed and buckled. Following cessation of the excessive loading, the first discrete segments 1064 of the buckling double membrane 1060 return to the initial shapes thereof.

The annular bumper 1080 can be axially separated from the buckling double membrane 1060 and limits deflection of the annular bearing element 440 so that the annular bearing element 440 is radially supported by the annular bumper 701 after the first discrete segments 1064 of the buckling double membrane 1060 have elastically deformed and buckled. The annular bumper 1080 thus ensures that the first discrete segments 1064 of the buckling double membrane 1060 do not plastically deform and that the first discrete segments 1064 are able to recover their initial shapes.

Once the first discrete segments 1064 elastically deform and buckle (i.e., snap-through), the first discrete segments 1064 are able to recover their initial shapes. The result is a low-profile arrangement with a low initial stiffness, then zero stiffness due to snap-through, followed by another region of relatively low stiffness until the annular bearing element 1040 is pressed against the annular bumper 1080, beyond which a high stiffness will be felt by the rotor.

With reference to FIG. 11, a force-limiting bearing support with recovery capability assembly 1101 is provided for mitigating imbalance in an engine, such as the engine 10 of FIGS. 1 and 2, due to an FBO event. The force-limiting bearing support with recovery capability assembly 1101 includes a casing, such as an engine casing (see, e.g., the casing 410 of FIG. 4), an annular flange 1120 that is fixed to the casing, an annular bearing element 1140, such as an outer race of a bearing (i.e., the second bearing 28 of FIG. 1), an optional axial restraint (see the axial restraint 450 of FIG. 4), a buckling single membrane 1160, one or more anti-rotation features 1170 and an annular bumper 1180. As above, the axial restraint is attached at opposite ends thereof to the casing and to the annular bearing element 1140 and is configured to axially restrain the annular bearing element 1140 relative to a plane of the annular flange 1120. The buckling single membrane 1160 is attached to an interior surface 1121 of the annular flange 1120. The buckling single membrane 1160 is configured to radially restrain the annular bearing element 1140 against loading up to a designed buckling load, which is designed to be less than or equal to loading of the FBO event, to elastically deform and buckle under excessive loading beyond the designed buckling load and to recover once the excessive loading ceases. The one or more anti-rotation features 1170 prevent relative rotation between the annular flange 1120 and the buckling single membrane 1160. The annular bumper 1180 is disposed within the annular flange 1120 to prevent plastic deformation of the buckling single membrane 1140 and to ensure that any deformation and buckling thereof remains elastic.

The buckling single membrane 1160 can include metallic material or some other suitable material and can include contact points 1163 affixed to the interior surface 1121 of the annular flange 1120 and discrete segments 1164 between neighboring contact points 1163. Each discrete segment 1164 can be curved radially inwardly for loading up to the designed buckling load and for elastic deformation and buckling due to loading at or above the designed buckling load. In accordance with embodiments, each contact point 1163 can be welded to the interior surface 1121 of the annular flange 1120. During the excessive loading, the discrete segments 1164 of the buckling single membrane 1160 remain elastically deformed and buckled. Following cessation of the excessive loading, the discrete segments 1164 of the buckling single membrane 1160 return to the initial shapes thereof.

Technical effects and benefits of the present disclosure are the provision of a force-limiting bearing support with recovery that uses an innovative snap-through buckling design to provide bearing support. This provides for an engine architecture in which at least the second bearing support for the second bearing can be broken due to buckling. This, in turn, provides for easier designing for increased lifespan and limiting loading.

The corresponding structures, materials, acts and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A force-limiting bearing support with recovery capability assembly (401) for mitigating imbalance in an engine (10) due to a fan blade off (FBO) event, the force-limiting bearing support (40) with recovery capability assembly (401) comprising:
an annular flange (420) fixed to a casing (410) of the engine (10);
spokes (430) extending radially inwardly from the annular flange (420);
an annular bearing element (440); and
a buckling membrane (460) attached to respective interior ends (431) of each of the spokes (430) to radially restrain the annular bearing element (440) against loading up to a designed buckling load, which is less than or equal to loading of the FBO event, to elastically buckle under excessive loading beyond the designed buckling load and to recover once the excessive loading ceases.

2. The force-limiting bearing support with recovery capability assembly (401) according to claim 1, wherein:
during the excessive loading, the buckling membrane (460) remains elastically buckled and the spokes (430) act as bumpers for radially restraining the annular bearing element (440), and
following cessation of the excessive loading, the buckling membrane (460) returns to an initial shape thereof.

3. The force-limiting bearing support with recovery capability assembly (401) according to claim 1 or 2, wherein:
the annular bearing element (440) comprises a radially outwardly extending flange (801),
each of the spokes (430) comprises forward and aft spokes (802, 803) to axially restrain the radially outwardly extending flange (801), and
the buckling membrane (460) comprises:
a forward buckling membrane (810) attached to the respective interior ends (431) of each of the forward spokes (802); and
an aft buckling membrane (820) attached to the respective interior ends (431) of each of the aft spokes (802, 803).

4. The force-limiting bearing support with recovery capability assembly (401) according to claim 1, 2 or 3, wherein the buckling membrane (460) comprises discrete segments (461) between neighboring spokes (430), each discrete segment (461) having an initial shape **characterized in that** each discrete segment (461) is curved radially inwardly for loading up to the designed buckling load.

5. The force-limiting bearing support with recovery capability assembly (401) according to claim 4, wherein:
respective ends of each of the discrete segments (461) are fixed to a corresponding spoke (430) at a point radially outboard of an interior end (431) of the corresponding spoke (430), and
the interior end (431) of the corresponding spoke (430) acts as a bumper against the annular bearing element (440) to prevent plastic deformation of the proximal discrete segments (461).

6. The force-limiting bearing support with recovery capability assembly (401) according to claim 4, wherein:
respective ends of each of the discrete segments (461) are fixed to an interior end (431) of a corresponding spoke (430), and
the force-limiting bearing support with recovery capability assembly (401) further comprises an annular bumper (701) to act against the annular bearing element (440) to prevent plastic deformation of the discrete segments (461).

7. A force-limiting bearing support with recovery capability assembly (1001) for mitigating imbalance in an engine (10) due to a fan blade off (FBO) event, the force-limiting bearing support with recovery capability assembly (1001) comprising:
an annular flange (1020) fixed to a casing (410) of the engine (10);
an annular bearing element (1040);
a buckling double membrane (1060) attached to an interior surface (1021) of the annular flange (1020) to radially restrain the annular bearing element (1040) against loading up to a designed buckling load, which is less than or equal to loading of the FBO event, to elastically buckle under excessive loading beyond the designed buckling load and to recover once the excessive loading ceases; and
an annular bumper (1080) disposed within the annular flange (1020) to prevent plastic deformation of the buckling double membrane (1060).

8. The force-limiting bearing support with recovery capability assembly (1001) according to claim 7, further comprising an anti-rotation feature (1070) to prevent relative rotation between the annular flange (1020) and the buckling double membrane (1060).

9. The force-limiting bearing support with recovery capability assembly (1001) according to claim 7 or 8, wherein:
during the excessive loading, the buckling double membrane (1060) remains elastically buckled, and
following cessation of the excessive loading, the buckling double membrane (1060) returns to an initial shape thereof.

10. The force-limiting bearing support with recovery capability assembly (1001) according to claim 7, 8 or 9, wherein the buckling double membrane (1060) comprises:
an interior membrane (1061) comprising first contact points (1063) and first discrete segments (1064) between neighboring first contact points (1063), each first discrete segment (1064) being curved radially inwardly for loading up to the designed buckling load; and
an exterior membrane (1062) comprising second contact points (1065) and second discrete segments (1066) between neighboring second contact points (1065), each second discrete segment (1066) being curved radially outwardly and affixed to the interior surface (1021) of the annular flange (1020),
each first contact point (1063) being affixed to a corresponding one of the second contact points (1065).

11. A force-limiting bearing support with recovery capability assembly (1101) for mitigating imbalance in an engine (10) due to a fan blade off (FBO) event, the force-limiting bearing support with recovery capability assembly (1101) comprising:
an annular flange (1120) fixed to a casing (410) of the engine (10);
an annular bearing element (1140);
a buckling single membrane (1160) attached to an interior surface (1121) of the annular flange (1120) to radially restrain the annular bearing element (1140) against loading up to a designed buckling load, which is less than or equal to loading of the FBO event, to elastically buckle under excessive loading beyond the designed buckling load and to recover once the excessive loading ceases; and
an annular bumper (1180) disposed within the annular flange (1120) to prevent plastic deformation of the buckling single membrane (1160),
wherein, optionally, the force-limiting bearing support with recovery capability assembly (1101) further comprises an anti-rotation feature (1170) to prevent relative rotation between the annular flange (1120) and the buckling single membrane (1160).

12. The force-limiting bearing support with recovery capability assembly (1101) according to claim 11, wherein:
during the excessive loading, the buckling single membrane (1160) remains elastically buckled, and
following cessation of the excessive loading, the buckling single membrane (1160) returns to an initial shape thereof.

13. The force-limiting bearing support with recovery capability assembly (1101) according to claim 11 or 12, wherein the buckling single membrane (1160) comprises:
contact points (1163) affixed to the interior surface (1121) of the annular flange (1120); and
discrete segments (1164) between neighboring contact points (1163), each discrete segment (1164) being curved radially inwardly for loading up to the designed buckling load.

14. The force-limiting bearing support with recovery capability assembly (401; 1001; 1101) according to any of claims 6 to 13, wherein the annular bumper (701; 1080; 1180) is axially offset from the buckling membrane (460; 1060; 1160).

15. The force-limiting bearing support with recovery capability assembly (401; 1001; 1101) according to any preceding claim, wherein the buckling membrane (460; 1060; 1160) comprises metallic material.
